# EUROPÄISCHE PATENTSCHRIFT

(11) **EP 4 542 580 B1**
(45) Veröffentlichungstag und Bekanntmachung des Hinweises auf die Patenterteilung: **29.04.2026**
(21) Anmeldenummer: 23204890.0
(22) Anmeldetag: 20.10.2023
(51) Int. Cl.: G21F 1/12, G21F 1/10, G21F 3/00

(54) **EINTEILIGE UMHÜLLUNG VON STRAHLENSCHUTZMATERIALIEN UND DEREN VERWENDUNG**
ONE-PIECE WRAPPING OF RADIATION SHIELDING MATERIALS AND ITS USE
ENVELOPPE EN UNE PIÈCE DE MATÉRIAUX DE PROTECTION CONTRE LES RAYONNEMENTS ET SON UTILISATION

(43) Veröffentlichungstag der Anmeldung: 23.04.2025
(73) Patentinhaber: MAVIG GmbH, 81829 München (DE)
(72) Erfinder: STOIAN, Christian, 81829 München (DE)
(74) Vertreter: Schwarz, Claudia

(56) Entgegenhaltungen:
- EP-B1- 0 127 241
- EP-B1- 3 504 715
- WO-A1-2007/147642
- WO-A1-98/53461
- ANONYMOUS: "Shore-H�rte f�r Elastomere und Kunststoffe | tecnoseal e.U.", 1 October 2023 (2023-10-01), pages 1 - 7, XP093138551, Retrieved from the Internet <URL:https://www.tecnoseal.at/service/shore-haerte/> [retrieved on 20240306]

## Beschreibung

Die Anmeldung betrifft die Verwendung einer einteiligen Umhüllung aus duroplastischen Polymer(en) zum Schutz von Strahlenschutzelementen, die aus mindestens einem elastischen Strahlenschutzmaterial bestehen, das Verfahren zur Herstellung der Umhüllung und das mit der Umhüllung versehene Strahlenschutzmaterial oder die Strahlenschutzelement.

In medizinischen, industriellen und wissenschaftlichen Einrichtungen wird häufig mit Strahlenquellen gearbeitet, die ionisierende Strahlung aussenden. Diese Strahlung, wie z.B. Röntgenstrahlung, kann schädliche biologische Wirkungen auf den menschlichen Körper haben und stellt bei unzureichender Abschirmung ein erhebliches Gesundheitsrisiko dar.

Herkömmliche Abschirmmethoden wie feste Wände mit Bleieinlagen oder fest montierte Bleischirme bieten zwar einen wirksamen Schutz, sind aber unflexibel und lassen sich nicht ohne weiteres an unterschiedliche Arbeitsanforderungen oder Raumaufteilungen anpassen.

Es besteht daher ein wachsender Bedarf an flexiblen, anpassungsfähigen und dennoch hochwirksamen Strahlenschutzeinrichtungen. Strahlenschutzelemente wie z.B. Strahlenschutzlamellen bieten eine ideale Lösung für diese Herausforderung. Sie kombinieren die Fähigkeit, hochenergetische Strahlung effektiv zu blockieren, mit der Flexibilität, die Strahlenschutzbarriere nach Bedarf zu öffnen oder zu schließen. Dies ermöglicht nicht nur einen dynamischen Schutz vor ionisierender Strahlung, sondern auch eine Anpassung an spezifische Anforderungen. Strahlenschutzlamellen können vielseitig eingesetzt werden, z.B. als Vorhang oder als Untertisch-Strahlenschutz bei dem die Lamellen an einem Patiententisch montiert werden. Beispiele für Lamellen und deren Verwendung sind in DE 10 2009 025 380 A1 und DE 10 2015 208 829 A1 offenbart.

Es ist bekannt, dass Strahlenschutzelemente - u. a. aus hygienischen Gründen und zum Schutz des Strahlenschutzmaterials - eine Hülle aufweisen. Die im Stand der Technik beschriebenen und in der Praxis verwendeten Umhüllungen von Strahlenschutzmaterialien bestehen aus thermoplastischen Folien (z.B. PVC oder thermoplastischen Polyurethanen (TPU)). Diese Umhüllung, oftmals als eine Art Tasche ausgebildet, entsteht durch das Verbinden von mindestens 2 Seiten von in Form gebrachten Folienteilen miteinander (z.B. durch thermisches Verschweißen oder anderer Behandlung). Dabei ist es wichtig, dass die Folienteile luftdicht verbunden sind, damit das Strahlenschutzelement hermetisch abgeschlossen ist. Die Verbindungsstellen der Folienteile z.B. die Schweißnähte sind jedoch gegenüber mechanischer Beanspruchung sehr sensibel, so dass die Umhüllungen besonders an den Nahtstellen aufgehen. Sind solche Hüllen beschädigt, muss das Strahlenschutzelement ausgetauscht werden. Ein Recycling des Elements ist oft schwierig.

Neben der Problematik mit den Nahtstellen, ist auch die Herstellung der umhüllten Strahlenschutzelemente aufwendig, da beim Umhüllen der Elemente darauf geachtet werden muss, dass keine Falten gebildet werden und dass es zu keinen Lufteinschlüssen kommt. Insbesondere Lufteinschlüsse können zu einer vorzeitigen Alterung des Strahlenschutzmaterials, v.a. durch Oxidationsprozesse, führen. Die EP 3748652 A1 beschreibt eine solche Umhüllung und ein Verfahren zur Herstellung von umhüllten Strahlenschutzelementen, bei dem die oben genannten Probleme der Faltenbildung und der Lufteinschlüsse vermieden werden.

EP 3 504 715 offenbart ein Strahlenschutzelement für einen Strahlenschutzvorhang zur Verwendung an einem Eingang und/oder einem Ausgang eines Strahlentunnels einer Röntgeninspektionsanlage, wobei das Strahlenschutzelement eine integrierte Austauschanzeige aufweist. Konkret betrifft die Anmeldung Strahlenschutzelemente die einen die ionisierende Strahlung schirmenden Kern aufweisen, der von wenigstens einer Schutzschicht umgeben ist, wobei die Schutzschicht aus wenigstens einer Außenschicht und mindestens einer Indikatorschicht besteht, wobei die Indikatorschicht aus wenigstens einer Schicht besteht, die farblich von der Außenschicht (122) unterscheidbar ist; dadurch gekennzeichnet, dass die Indikatorschicht aus mehreren Schichten besteht, wobei jeweils benachbarte Schichten farblich voneinander unterscheidbar sind; und die Außenschicht (122) wenigstens eines der folgenden Materialien enthält oder daraus besteht: Gummi, PVC, Schutzlack.

Das beschriebene Verfahren zur Umhüllung von Strahlenschutzmaterialien und -elementen hat aber weiterhin den Nachteil, dass die Umhüllung an den Verbindungslinien eine labile Stelle aufweist.

Ein weiteres Problem bei der Umhüllung mit thermoplastischen Polymeren besteht darin, dass beim Verschließen der Nähte die Luftdichtigkeit nur dann gewährleistet ist, wenn sich keine losen Partikel auf den zu verschließenden Folien befinden. Das Strahlenschutzmaterial wird jedoch, insbesondere wenn die Matrix aus Naturkautschuk besteht, mit Talkum behandelt. Um Undichtigkeiten in der Umhüllung zu vermeiden, muss die Oberfläche des zu umhüllenden Materials gereinigt werden.

Die vorliegende Anmeldung stellt insbesondere eine Alternative und Weiterentwicklung zu der in EP 3748 652 A1 und EP 1613 217 A1 beschriebenen Technologien dar.

Die Erfindung betrifft somit ein Verfahren zur einteiligen Umhüllung von aus Strahlenschutzmaterial hergestellten Strahlenschutzelementen, unter Verwendung von duroplastischen lösungsmittelfreien Polymeren mit einer Shore A-Härte (gemessen nach DIN 53505) im Bereich von 50 bis 90, die Verwendung solcher Polymere zur Umhüllung dieser Strahlenschutzelemente, das mit solchen Polymeren umhüllte Strahlenschutzelement sowie aus den umhüllten Elementen hergestellte Strahlenschutzvorrichtungen oder -einrichtung wie hier und/oder in den unabhängigen Ansprüchen und abhängigen Ansprüchen beschrieben.

In einer Ausführungsform betrifft die Erfindung somit die Verwendung einer aus duroplastischen Polymer(en) bestehenden einteiligen Umhüllung zum Schutz von Strahlenschutzelementen, die aus mindestens einem Strahlenschutzmaterial bestehen, das aus mindestens einem Elastomer und mindestens einem schweren chemischen Element - in ionischer oder elementarer Form - gebildet ist, wobei das chemische Element ausgewählt ist aus Blei (Pb), Bismut (Bi), Wolfram (T), Zinn (Sn), Antimon (Sb) und Barium (Ba).

Die Polymerumhüllung ist elastisch und weist eine Shore A-Härte im Bereich von 50 bis 90, vorzugsweise im Bereich von 60 bis 70 auf. Das Strahlenschutzmaterial ist somit von dem duroplastischen Polymer umgeben und sozusagen eingekapselt.

Für Elastomere und verformbare Kunststoffe ist die Härteprüfung nach Shore ein einfaches und wirksames Verfahren der Werkstoffprüfung und eine einfache Methode der Härtemessung. Die Messung nach Shore ist bekannt und teilweise in DIN-Normen festgelegt. Im Wesentlichen wird ein Härteprüfer verwendet, der die Eindringtiefe und -zeit eines speziell geformten Eindringkörpers (Indenter) misst und daraus die Härte des Werkstoffes bestimmt.

In einer weiteren Ausführungsform betrifft die Erfindung die Verwendung wie in der vorherigen Ausführungsform definiert, wobei das duroplastische Polymer ein Polyharnstoff oder ein Polyurethan ist, in dem als Härter mindestens eine Polyisocyanatverbindung verwendet wird. Bevorzugt werden aromatische Polyharnstoffe verwendet, da diese bei der Herstellung schneller trocknen. Weiterhin bevorzugt werden lösungsmittelfreie Zweikomponentensysteme verwendet.

In einer weiteren Ausführungsform betrifft die Erfindung die Verwendung nach einer der vorhergehenden Ausführungsformen, wobei die Schichtdicke des duroplastischen Polymers höchstens 2 mm, vorzugsweise höchstens 1 mm, besonders bevorzugt höchstens 0,6 mm beträgt.

In einer weiteren Ausführungsform betrifft die Erfindung die Verwendung nach einer der vorhergehenden Ausführungsformen, wobei der Vernetzer des Polymers ausgewählt ist unter aliphatischen oder aromatischen Di- oder Polyaminverbindungen und aliphatischen oder aromatischen Di- oder Polyolverbindungen.

In einer weiteren Ausführungsform betrifft die Erfindung die Verwendung nach einer der vorhergehenden Ausführungsformen, wobei das Polymer Additive, wie Füllstoffe, UV-Filter, Farbpigmente enthält.

In einer weiteren Ausführungsform betrifft die Erfindung die Verwendung nach einer der vorhergehenden Ausführungsformen, dadurch gekennzeichnet, dass das schwere chemische Element Blei oder Bismut ist und das Elastomer ausgewählt ist unter Naturkautschuk (NR), Synthesekautschuk (BR) oder chlorsulfoniertem Polyethylen (CSM), jeweils ggf. vulkanisiert.

In einer weiteren Ausführungsform betrifft die Erfindung ein mit duroplastischem Polymer umhülltes aus Strahlenschutzmaterial bestehendes Strahlenschutzelement wie in einer der hier auf die Verwendung oder das Verfahren gerichteten Ausführungsformen definiert, wobei die Umhüllung einteilig ist und eine Dicke von kleiner oder gleich 2 mm, bevorzugt kleiner oder gleich 1 mm, besonders bevorzugt, kleiner oder gleich 0,6 mm aufweist.

In einer weiteren Ausführungsform betrifft die Erfindung ein Strahlenschutzelement wie in der vorherigen Ausführungsform [definiert, wobei das Elastomer des Strahlenschutzmaterials ausgewählt ist aus Naturkautschuk (NR), Synthesekautschuk (BR) und chlorsulfoniertem Polyethylen (CSM), die jeweils ggf. vulkanisiert sind.

In einer weiteren Ausführungsform betrifft die Erfindung ein Strahlenschutzelement wie in der vorherigen Ausführungsform definiert, wobei das schwere chemische Element Blei oder Bismut ist.

In einer weiteren Ausführungsform betrifft die Erfindung ein Strahlenschutzelement wie in einer der drei vorhergehenden Ausführungsformen definiert, wobei die Shore A-Härte des Strahlenschutzmaterials im Bereich von 50-70 liegt und/oder einen Bleigleichwert von mindestens 0,5 mm Blei aufweist.

In einer weiteren Ausführungsform betrifft die Erfindung ein Strahlenschutzelement wie in einer der vier vorhergehenden Ausführungsformen definiert, wobei das Element eine Lamelle für einen Untertisch-Strahlenschutz oder einen Vorhang ist. Ein Vorhang aus solchen Lamellen stellt eine Strahlenschutzeinrichtung dar. Das Element kann insbesondere eine Vertikallamelle für Vorhänge sein sowie eine Kassettenabdeckung oder ein Abdeckwinkel.

Die Umhüllung bildet im Gegensatz zu den Folientaschen des Standes der Technik einen mechanisch integralen Bestandteil des Gesamtsystems und damit sind auch neue Befestigungsmethoden ohne Vernieten oder Verschrauben - also Durchbohren - des Schutzmaterials erlaubt, wie z.B. Klammern.

In einer Ausführungsform [L] betrifft die Erfindung ein Verfahren zur Herstellung eines Strahlenschutzelements wie in einer der Ausführungsformen [G] bis [K] definiert, umfassend folgende Verfahrensschritte:
Schritt (1) Bereitstellen des Strahlenschutzmaterials umfassend ein Elastomer und ein schweres chemisches Element, ggf. in Bahnform, wobei das Elastomer Naturkautschuk (NR), Synthesekautschuk (BR) oder Chlorsulfoniertes Polyethylen (CSM) ist und wobei das schwere Element ausgewählt ist aus Blei (Pb), Bismut (Bi), Wolfram (T), Zinn (Sn), Antimon (Sb) und Barium (Ba);
Schritt (2) Verarbeiten, Ausschneiden oder Ausstanzen des Strahlenschutzmaterial in Form des Strahlenschutzelements;
Schritt (3) Umhüllen des Elements durch simultanes Auftragen des Vernetzer und des Härters, sowie ggf. Additive, wie in einer der vorhergehenden Ausführungsformen definiert, wobei das Auftragen ggf. mit einem Mehrkomponentenhochdruckgerät als Heißspritzverfahren durchgeführt wird, wobei die Dicke der Umhüllung kleiner oder gleich 2 mm ist, bevorzugt kleiner oder gleich 1 mm, besonders bevorzugt, kleiner oder gleich 0,6 mm und eine Shore A-Härte aufweist, die im Bereich von 50 bis 90 liegt.

In einer Ausführungsform [M] betrifft die Erfindung ein Verfahren zur Herstellung eines Strahlenschutzelements wie in Ausführungsform [L] definiert, wobei die Elemente aus Strahlenschutzmaterial für die Umhüllung bereitgestellt werden und Schritt (2) entfällt.

In einer Ausführungsform [N] betrifft die Erfindung ein Verfahren zur Herstellung eines Strahlenschutzelements wie in der Ausführungsform [L] oder [M] definiert, wobei das Element eine Lamelle für einen Vorhang ist. Das Element kann insbesondere eine Vertikallamellen für Vorhänge oder Untertisch-Strahlenschutzeinrichtungen sein sowie eine Kassettenabdeckung oder ein Abdeckwinkel sein.

In einer Ausführungsform [O] betrifft die Erfindung ein Strahlenschutzelement das mit einem Verfahren wie in einer der Ausführungsformen [L] bis [N] definiert hergestellt ist.

Die erfindungsgemäßen duroplastischen Polymere zeichnen sich durch ihre hohe Beständigkeit gegen Chemikalien, extreme Temperaturen und physikalische Beanspruchung aus.

Das Strahlenschutzmaterial enthält mindestens ein schweres chemisches Element - in ionischer oder elementarer Form, wobei das chemische Element ausgewählt ist aus Blei (Pb), Bismut (Bi), Wolfram (T), Zinn (Sn), Antimon (Sb) und Barium (Ba). Bevorzugt sind Blei und Bismut, besonders bevorzugt ist Blei.

Die Erfindung ermöglicht es, Umhüllungen zur Verfügung zu stellen, die ohne Verbindungsstellen, z.B. Schweißnähte auskommen und so die Nachteile des Standes der Technik vermeiden. Die Umhüllung entsteht direkt nach dem Aushärten der aufgebrachten Polymerkomponenten (Vernetzer (Basis) und Härter) auf dem zu umhüllenden Strahlenschutzmaterial bzw. den daraus hergestellten Elementen. Die Umhüllung weist zudem eine hohe Abriebfestigkeit und Bruchdehnung auf.

Die erfindungsgemäße Umhüllung aus vernetztem duroplastischem Polymer ist nahtlos und wird daher hier auch als einteilige Umhüllung bezeichnet. Das Strahlenschutzmaterial ist durch die Hülle hermetisch eingeschlossen.

Für das Verfahren wird üblicherweise ein Mehrkomponenten-Hochdruckgerät verwendet. Bei diesem Verfahren werden die Komponenten A und B (und weitere Additive) erhitzt und unter hohem Druck zerstäubt. Beim Austritt aus der Düse vermischen sich die beiden Komponenten an der Oberfläche. Das Material härtet in kurzer Zeit handtrocken aus.

Die Reaktionszeit beträgt weniger als 30 Sekunden und die Beschichtung ist nach weniger als 5 Minuten handtrocken. Die Durchtrocknung dauert länger und liegt bei ca. 24 Stunden. Nach der Trocknung kann eine weitere Schicht aufgetragen werden, um z.B. vor UV-Strahlung zu schützen oder um die gewünschte Farbe oder Glanz zu erzielen.

Die erfindungsgemäßen duroplastischen Polymere, wie insbesondere Polyharnstoffe und Polyurethane entstehen durch die Polymerisation von mindestens zwei Komponenten, nämlich einer Basis (einem Vernetzer, Komponente A), und einem Härter (Komponente B) unmittelbar nach dem Auftragen auf das Strahlenschutzmaterial bzw. die daraus bestehenden Elemente.

Der Vorteil der einteiligen Umhüllung liegt neben der Einfachheit der Herstellung vor allem darin, dass es keine Verbindungsstellen gibt, die aufreißen können. Außerdem bedarf das zu umhüllende Strahlenschutzmaterial keiner Vorbehandlung, indem z. B. die Oberflächen der aus Strahlenschutzmaterial bestehenden Elemente gerade nicht von Substanzen aus dem Herstellungsprozess befreit werden müssen.

Dies kann z. B. Talkum sein, wenn als Strahlenschutzmaterial sog. Bleigummi verwendet wird. Talkum führt bei mehrteiligen thermoplastischen Umhüllungen nach dem Stand der Technik regelmäßig zu Undichtigkeiten an den Verbindungsstellen, weil beim Verschließen Verunreinigungen in der Verbindungsstelle vorhanden sind.

Durch die einteilige Umhüllung ist das Strahlenschutzmaterial wirksam vor Oxidation und schneller Alterung geschützt und hat eine lange Lebensdauer. Ebenso wird eine unbeabsichtigte Kontamination mit ggf. gesundheitsschädlichen Stoffen (z.B. Schwermetalle, Blei, Bismut etc.) minimiert bzw. ausgeschlossen. Die Beschichtung ist zudem mechanisch belastbar und leicht zu reinigen.

Die erfindungsgemäße Verwendung von duroplastischen Polymeren zur Umhüllung von Strahlenschutzmaterial und daraus hergestellten Elementen ist bislang noch nicht bekannt.

Aufgrund des Herstellungsverfahrens der Umhüllungen sind ferner solche Vernetzer und Härter bevorzugt, die bei Raumtemperatur flüssig sind oder bei Temperaturen bis 250 °C ohne Zersetzung schmelzen.

Unter den verwendbaren Polyharnstoffen werden solche aus aromatischen Polyaminen als Vernetzer bevorzugt.

Unter den verwendbaren Polyurethanen werden solche mit aliphatischen Polyolen als Vernetzer bevorzugt.

Die erfindungsgemäße Umhüllung kann gleichfalls noch Additive enthalten, die z.B. für UV-Schutz sorgen.

Strahlenschutzmaterialien sind Materialien, die in der Lage sind, schädliche ionisierende Strahlung, wie z.B. Röntgenstrahlung zu blockieren oder zu absorbieren. Diese Strahlenschutzmaterialien enthalten mindestens eine Art der folgenden schweren chemischen Elemente wie Blei (Pb), Bismut (Bi), Wolfram (T), Zinn (Sn), Antimon (Sb) und Barium (Ba). Die Elemente werden üblicherweise in eine Polymermatrix eingebettet. Diese kann aus verschiedenen Materialien bestehen. Erfindungsgemäße Polymermatrizen umfassen duroplastische Elastomere, insbesondere Polyharnstoffe und Polyureas, die ggf. vulkanisiert sind.

Das Strahlenschutzmaterial kann auch in Form von Verbundwerkstoffen vorliegen, bei denen verschiedene Strahlenschutzmaterialien kombiniert werden, um ein geringeres Gewicht und einen hohen Tragekomfort bei ausreichendem Bleigleichwert zu erreichen.

In der vorliegenden Erfindung wird bevorzugt Bleigummi verwendet. Es ist ein Elastomermaterial, das hauptsächlich aus einer Polymermatrix besteht, die mit Bleipulver oder Bleipartikeln (Blei in elementarer oder oxidierter Form) durchsetzt oder beladen ist, wobei das Blei hauptsächlich dazu dient, das Elastomermaterial hinsichtlich seiner strahlungsabsorbierenden Eigenschaften zu modifizieren.

Das Elastomer, d.h. der elastische Bestandteil kann Naturkautschuk (NR), Synthesekautschuk (BR) oder Chlorsulfoniertes Polyethylen (CSM) sein. Andere Kautschuke, die eine mit Naturkautschuk vergleichbare Shore A-Härte aufweisen, sind auch möglich.

Naturkautschuk (NR) besitzt u.a. eine hohe Elastizität, Kälteflexibilität und ausgezeichnete dynamische Eigenschaften. Ohne entsprechende Ausrüstung mit Schutzadditiven ist jedoch die Widerstandsfähigkeit gegen Alterung und Ozon nur gering, darüber hinaus ist Naturkautschuk nicht beständig gegen den Kontakt mit mineralischen Ölen und Fetten.

NR gibt es für die Härtebereiche Shore A 30-90. CSM ist für die Härtebereiche Shore A 45 bis 90 erhältlich.

In einer Ausführungsform der Erfindung wird ein Bleigummi-Einschichtmaterial hergestellt, das zur Verwendung als Strahlenschutzelemente, insbesondere als Vertikallamellen für Vorhänge, oder Untertisch-Strahlenschutzeinrichtungen sowie als Kassettenabdeckungen, Abdeckwinkel und dergleichen geeignet ist. Dieses Bleigummi-Einschichtmaterial umfasst eine Strahlenschutzmatrix, insbesondere eine bleihaltige und schwefelvernetzte Bleigummiplatte und die mit dem erfindungsgemäßen duroplastischen Polymer hergestellte Umhüllung.

Das Material aus bleihaltigem Gummi kann ggf. eine zentrale, gegebenenfalls friktionierte Gewebeeinlage aufweisen und zusätzliche Beschichtungen aufweisen. Das Material hat vorzugsweise einen Bleigleichwert im Bereich von 0,5 bis 2,00 mm Blei, die Shore-A-Härte liegt üblicherweise im Bereich von 50 bis 70.

Das Strahlenschutzmaterial wird zu Elementen verarbeitet, diese Elemente werden zu Strahlenschutzanordnungen zusammengefügt. Eine solche Strahlenschutzanordnung kann z.B. ein Vorhang sein oder es kann sich um eine Unterkörperschutz-Anordnung handeln. Die Strahlenschutzanordnungen können befestigt sein, z.B. vor einem Fenster oder an mindestens einem seitlichen Bereich eines Behandlungstisches. Diese Strahlenschutzanordnung, insbesondere wenn es sich um eine Unterkörperschutz-Anordnung handelt, besteht aus einem Oberteil, das an einer am Ort der Verwendung (z.B. Tisch) befestigten Trägerschiene angeordnet ist, sowie aus mehreren an der Unterseite der Trägerschiene befestigten Lamellen, die seitlich nebeneinander überlappend angeordnet sind. In der Fig.1 in EP 1613217 B1 ist eine solche Anordnung abgebildet.

In einer Ausführungsform liegt das Bleischutzmaterial in Form von (Vorhangs-) Lamellen vor. Diese Lamellen werden auf Vorhanglaufschienen montiert. Diese sind aus speziellen Materialien wie z.B. Aluminium. Der Laufwagen solcher Lamellenvorhänge hat einen stabilen, vorzugsweise auf Hartkunststoff gebildeten Laufwagen. Die Lamellenaufnahme ist aus sehr belastbaren Material gefertigt, z.B. Kohlefasern.

## Patentansprüche

1. Mit duroplastischem Polymer umhülltes Strahlenschutzelement das mindestens aus einem Strahlenschutzmaterial besteht, das aus mindestens einem Elastomer und mindestens einem schweren chemischen Element - in ionischer oder elementarer Form - gebildet ist, wobei das chemische Element ausgewählt ist aus Blei (Pb), Bismut (Bi), Wolfram (W), Zinn (Sn), Antimon (Sb) und Barium (Ba), **dadurch gekennzeichnet, dass** die Shore A-Härte der Umhüllung im Bereich von 50 bis 90 liegt, wobei die Umhüllung einteilig ist und eine Dicke von kleiner oder gleich 2 mm aufweist.

2. Strahlenschutzelement nach Anspruch 1, **dadurch gekennzeichnet, dass** das duroplastische Polymer der Umhüllung ein Polyharnstoff oder ein Polyurethan ist, in dem als Härter mindestens eine Polyisocyanatverbindung verwendet wird.

3. Strahlenschutzelement nach Anspruch 1 oder 2, wobei der Vernetzer des duroplastischen Polymers ausgewählt ist unter aliphatischen oder aromatischen Di- oder Polyaminverbindungen und aliphatischen oder aromatischen Di- oder Polyolverbindungen.

4. Strahlenschutzelement einem der vorhergehenden Ansprüche, wobei das duroplastische Polymer Additive, wie Füllstoffe, UV-Filter, Farbpigmente enthält.

5. Strahlenschutzelement nach einem der vorhergehenden Ansprüche, wobei das Elastomer des Strahlenschutzmaterials ausgewählt ist aus Naturkautschuk (NR), Synthesekautschuk (BR) und Chlorsulfoniertem Polyethylen (CSM).

6. Strahlenschutzelement nach einem der vorhergehenden Ansprüche, wobei das schwere chemische Element im Strahlenschutzmaterial Blei oder Bismut ist.

7. Strahlenschutzelement nach einem der vorhergehenden Ansprüche, wobei die Shore A-Härte des Strahlenschutzmaterials im Bereich von 50 bis 70 liegt und/oder einen Bleigleichwert von mindestens 0,5 mm Blei aufweist.

8. Strahlenschutzelement nach einem der vorhergehenden Ansprüche, wobei das Element eine Lamelle für einen Untertisch-Strahlenschutz oder einen Vorhang ist, oder eine Kassettenabdeckung oder ein Abdeckwinkel ist.

9. Verfahren zur Herstellung eines umhüllten Strahlenschutzelements, wie in einem der vorhergehendend Ansprüche definiert, umfassend folgende Verfahrensschritten:
(1) Bereitstellen des Strahlenschutzmaterials umfassend ein Elastomer und ein schweres chemisches Element, ggf. in Bahnform, wobei das Elastomer Naturkautschuk (NR), Synthesekautschuk (BR) oder Chlorsulfoniertes Polyethylen (CSM) ist und wobei das schwere Element ausgewählt ist aus Blei (Pb), Bismut (Bi), Wolfram (T), Zinn (Sn), Antimon (Sb) und Barium (Ba);
(2) Bearbeiten, Schneiden oder Stanzen des Strahlenschutzmaterials in Form des Strahlenschutzelements;
(3) Umhüllen des Elements durch simultanes Auftragen des Vernetzer und des Härters, sowie ggf. Additive, wie in einem der vorhergehenden Ansprüche definiert, wobei das Auftragen ggf. mit einem Mehrkomponentenhochdruckgerät als Heißspritzverfahren durchgeführt wird, wobei die Dicke der Umhüllung kleiner oder gleich 2 mm ist, und eine Shore A-Härte aufweist, die im Bereich von 50 bis 90 liegt.

10. Verfahren nach Anspruch 9, wobei Elemente aus Strahlenschutzmaterial für die Umhüllung bereitgestellt werden und der Schritt (2) entfällt.

11. Verwendung einer einteiligen aus duroplastischen Polymer bestehenden Umhüllung zum Schutz von Strahlenschutzelementen, die aus mindestens einem Strahlenschutzmaterial bestehen, das aus mindestens einem Elastomer und mindestens einem schweren chemischen Element - in ionischer oder elementarer Form - gebildet ist, wobei das chemische Element ausgewählt ist aus Blei (Pb), Bismut (Bi), Wolfram (T), Zinn (Sn), Antimon (Sb) und Barium (Ba), wobei die Shore A-Härte der Umhüllung im Bereich von 50 bis 90 liegt.

12. Verwendung nach Anspruch 11, wobei das duroplastische Polymer ein Polyharnstoff oder ein Polyurethan ist, in dem als Härter mindestens eine Polyisocyanatverbindung verwendet wird.

13. Verwendung nach Anspruch 11 oder 12 , wobei die Schichtdicke des duroplastischen Polymers kleiner oder gleich 2 mm beträgt.

14. Verwendung nach einem der Ansprüche 11 bis 13, wobei der Vernetzer des Polymers ausgewählt ist unter aliphatischen oder aromatischen Di- oder Polyaminverbindungen und aliphatischen oder aromatischen Di- oder Polyolverbindungen.

15. Verwendung nach einem der Ansprüche 11 bis 14, wobei das Polymer Additive, wie Füllstoffe, UV-Filter, Farbpigmente enthält.

## Claims

1. Radiation protection element, which is coated with thermosetting polymer, consisting of at least one radiation shielding material formed from at least one elastomer and at least one heavy chemical element in ionic or elemental form, wherein the chemical element is selected from lead (Pb), bismuth (Bi), tungsten (W), tin (Sn), antimony (Sb) and barium (Ba), **characterised in that** the Shore A hardness of the coating is in the range of 50 to 90, wherein the coating is one-piece and has a thickness of less than or equal to 2 mm.

2. Radiation protection element according to claim 1, **characterised in that** the thermosetting polymer of the coating is a polyurea or a polyurethane in which at least one polyisocyanate compound is used as a hardener.

3. Radiation protection element according to claim 1 or 2, wherein the cross-linking agent of the thermosetting polymer is selected from aliphatic or aromatic di- or polyamine compounds and aliphatic or aromatic di- or polyol compounds.

4. Radiation protection element according to one of the preceding claims, wherein the thermosetting polymer contains additives such as fillers, UV filters, colour pigments.

5. Radiation protection element according to one of the preceding claims, wherein the elastomer of the radiation shielding material is selected from natural rubber (NR), synthetic rubber (BR) and chlorosulphonated polyethylene (CSM).

6. Radiation protection element according to one of the preceding claims, wherein the heavy chemical element in the radiation shielding material is lead or bismuth.

7. Radiation protection element according to one of the preceding claims, wherein the Shore A hardness of the radiation shielding material is in the range of 50 to 70 and/or has a lead equivalent of at least 0.5 mm lead.

8. Radiation protection element according to one of the preceding claims, wherein the element is a slat for under-table radiation protection or a curtain, or is a cassette cover or a cover bracket.

9. Method for manufacturing a coated radiation protection element as defined in one of the preceding claims, comprising the following steps:
(1) providing the radiation protection material comprising an elastomer and a heavy chemical element, optionally in sheet form, wherein the elastomer is natural rubber (NR), synthetic rubber (BR) or chlorosulphonated polyethylene (CSM) and wherein the heavy element is selected from lead (Pb), bismuth (Bi), tungsten (T), tin (Sn), antimony (Sb) and barium (Ba);
(2) Machining, cutting or punching the radiation shielding material into the shape of the radiation shielding element;
(3) Coating the element by simultaneously applying the cross-linking agent and the hardener, as well as any additives as defined in one of the preceding claims, wherein the application is carried out, if necessary, with a multi-component high-pressure device as a hot spray process, wherein the thickness of the coating is less than or equal to 2 mm and has a Shore A hardness in the range of 50 to 90.

10. Method according to claim 9, wherein elements made of radiation protection material are provided for the coating and step (2) is omitted.

11. Use of a one-piece coating consisting of thermosetting polymer for the protection of radiation protection elements consisting of at least one radiation protection material formed from at least one elastomer and at least one heavy chemical element - in ionic or elemental form - wherein the chemical element is selected from lead (Pb), bismuth (Bi), tungsten (T), tin (Sn), antimony (Sb) and barium (Ba), the Shore A hardness of the casing being in the range from 50 to 90.

12. Use according to claim 11, wherein the thermosetting polymer is a polyurea or a polyurethane in which at least one polyisocyanate compound is used as a hardener.

13. Use according to claim 11 or 12, wherein the layer thickness of the thermosetting polymer is less than or equal to 2 mm.

14. Use according to any of claims 11 to 13, wherein the cross-linking agent of the polymer is selected from aliphatic or aromatic di- or polyamine compounds and aliphatic or aromatic di- or polyol compounds.

15. Use according to any of claims 11 to 14, wherein the polymer contains additives such as fillers, UV filters, colour pigments.

## Revendications

1. Élément de protection contre les rayonnements enrobé de polymère thermodurcissable, constitué d'au moins un matériau de protection contre les rayonnements formé d'au moins un élastomère et d'au moins un élément chimique lourd sous forme ionique ou élémentaire, l'élément chimique étant choisi parmi le plomb (Pb), le bismuth (Bi), le tungstène (W), l' étain (Sn), antimoine (Sb) et baryum (Ba), **caractérisé en ce que** la dureté Shore A de l'enrobage est comprise entre 50 et 90, l'enrobage étant d'un seul tenant et présentant une épaisseur inférieure ou égale à 2 mm.

2. Élément de protection contre les rayonnements selon la revendication 1, **caractérisé en ce que** le polymère thermodurcissable de l'enrobage est une polyurée ou un polyuréthane dans lequel au moins un composé polyisocyanate est utilisé comme durcisseur.

3. Élément de protection contre les rayonnements selon la revendication 1 ou 2, dans lequel l'agent de réticulation du polymère thermodurcissable est choisi parmi des composés di- ou polyamines aliphatiques ou aromatiques et des composés di- ou polyols aliphatiques ou aromatiques.

4. Élément de protection contre les rayonnements selon l'une des revendications précédentes, dans lequel le polymère thermodurcissable contient des additifs tels que des charges, des filtres UV, des pigments colorés.

5. Élément de protection contre les rayonnements selon l'une des revendications précédentes, dans lequel l'élastomère du matériau de protection contre les rayonnements est choisi parmi le caoutchouc naturel (NR), le caoutchouc synthétique (BR) et le polyéthylène chlorosulfoné (CSM).

6. Élément de protection contre les rayonnements selon l'une des revendications précédentes, l'élément chimique lourd dans le matériau de protection contre les rayonnements étant le plomb ou le bismuth.

7. Élément de protection contre les rayonnements selon l'une des revendications précédentes, la dureté Shore A du matériau de protection contre les rayonnements étant comprise entre 50 et 70 et/ou présentant une équivalence en plomb d'au moins 0,5 mm de plomb.

8. Élément de protection contre les rayonnements selon l'une des revendications précédentes, dans lequel l'élément est une lamelle pour une protection contre les rayonnements sous table ou un rideau, ou un cache-cassette ou une cornière de recouvrement.

9. Procédé de fabrication d'un élément de protection contre les rayonnements enveloppé, tel que défini dans l'une des revendications précédentes, comprenant les étapes suivantes :
(1) fournir le matériau de protection contre les rayonnements comprenant un élastomère et un élément chimique lourd, éventuellement sous forme de bande, l'élastomère étant du caoutchouc naturel (NR), du caoutchouc synthétique (BR) ou du polyéthylène chlorosulfoné (CSM) et l'élément lourd étant choisi parmi le plomb (Pb), le bismuth (Bi), du tungstène (T), de l'étain (Sn), de l'antimoine (Sb) et du baryum (Ba) ;
(2) usiner, découper ou estamper le matériau de protection contre les rayonnements sous la forme de l'élément de protection contre les rayonnements ;
(3) Enrobage de l'élément par application simultanée du réticulant et du durcisseur, ainsi que, le cas échéant, additifs, tels que définis dans l'une des revendications précédentes, l'application étant effectuée, le cas échéant, à l'aide d'un appareil à haute pression à plusieurs composants selon un procédé de projection à chaud, l'épaisseur de l'enrobage étant inférieure ou égale à 2 mm et présentant une dureté Shore A comprise entre 50 et 90.

10. Procédé selon la revendication 9, dans lequel des éléments en matériau de protection contre les rayonnements sont fournis pour l'enveloppe et l'étape (2) est supprimée.

11. Utilisation d'un revêtement monobloc en polymère thermodurcissable pour protéger des éléments de protection contre les rayonnements, qui sont constitués d'au moins un matériau de protection contre les rayonnements formé d'au moins un élastomère et d'au moins un élément chimique lourd - sous forme ionique ou élémentaire -, l'élément chimique étant choisi parmi le plomb (Pb), le bismuth (Bi), le tungstène (T), l'étain (Sn), l'antimoine (Sb) et le baryum (Ba), la dureté Shore A de l'enveloppe étant comprise entre 50 et 90.

12. Utilisation selon la revendication 11, dans laquelle le polymère thermodurcissable est une polyurée ou un polyuréthane dans lequel au moins un composé polyisocyanate est utilisé comme durcisseur.

13. Utilisation selon la revendication 11 ou 12 , dans laquelle l'épaisseur de la couche de polymère thermodurcissable est inférieure ou égale à 2 mm.

14. Utilisation selon l'une des revendications 11 à 13, dans laquelle l'agent de réticulation du polymère est choisi parmi des composés di- ou polyamines aliphatiques ou aromatiques et des composés di- ou polyols aliphatiques ou aromatiques.

15. Utilisation selon l'une des revendications 11 à 14, le polymère contenant des additifs tels que des charges, des filtres UV, des pigments colorés.
